# FASCICULE DE BREVET EUROPEEN

(11) **EP 3 638 826 B1**
(45) Date de publication et mention de la délivrance du brevet: **31.03.2021**
(21) Numéro de dépôt: 18735714.0
(22) Date de dépôt: 13.06.2018
(51) Int. Cl.: C01B 7/19, C01B 21/38, C01F 7/54, C23F 1/46, C23F 1/36, C23G 1/36, C01G 23/00

(54) **PROCEDE DE REGENERATION D'UN BAIN D'USINAGE CHIMIQUE DE PIECES EN TITANE**
VERFAHREN ZUR REGENERIERUNG EINES BADES ZUM CHEMISCHEN ÄTZEN VON TITANTEILEN
PROCESS FOR REGENERATING A BATH FOR CHEMICAL ETCHING OF TITANIUM PARTS

(30) Priorité: 16.06.2017 FR 1770637
(43) Date de publication de la demande: 22.04.2020
(73) Titulaire: Satys Surface Treatment Toulouse, 31700 Cornebarrieu (FR)
(72) Inventeur: NICOLAS, Mathieu, 31780 Castelginest (FR)
(74) Mandataire: Argyma
(86) Numéro de dépôt international: PCT/IB2018/054300
(87) Numéro de publication internationale: WO 2018/229672

(56) Documents cités:
- FR-A1- 2 946 364
- US-A- 4 943 419

## Description

La présente invention appartient au domaine des procédés de fabrication de pièces métalliques par usinage chimique et plus particulièrement à celui du traitement des bains d'attaque chimique des métaux et de leurs alliages.

Elle a pour objet un procédé de régénération d'un bain nitrofluorhydrique d'attaque chimique de pièces en titane ou alliage de titane, permettant d'éliminer le titane dissous dans le bain et de recycler les réactifs acides HF et HNO₃ avec un impact environnemental réduit.

Le titane, seul ou allié, est utilisé dans les domaines du spatial et de l'aéronautique en raison de ses excellentes caractéristiques mécaniques associées à une résistance remarquable à la corrosion et à une bonne tenue aux températures élevées. La fabrication des pièces, simples ou complexes, fait couramment appel à la technique de l'usinage chimique, qui consiste à enlever de la matière au moyen d'une attaque acide permettant la dissolution chimique du titane. Elle peut se faire soit sur l'intégralité de la pièce pour une mise à épaisseur. Elle peut également se faire de manière sélective, sur certaines parties d'une pièce, par application d'un masque localisé. On peut ainsi alléger une structure, par exemple d'un panneau, en enlevant de quelques dizaines de microns à plusieurs millimètres de matière. Cette problématique d'allègement de pièces est centrale dans le secteur de la construction aéronautique (avions, hélicoptères).

La préparation des surfaces des pièces en titane est également réalisée par attaque chimique, sur des épaisseurs moindres (0,1 mm au maximum et de l'ordre de 30 µm en général), comme c'est le cas lors du décapage et de la décontamination des pièces. Dans la suite de la présente description, le terme "usinage" inclura aussi bien la préparation des surfaces que l'usinage à proprement parler, les techniques étant très proches.

La technique d'usinage chimique consiste à immerger une pièce dans un bain d'attaque durant un laps de temps adéquat et contrôlé, pour obtenir l'enlèvement de matière recherché. On utilise généralement une solution d'acide fluorhydrique (HF) et d'acide nitrique (HNO₃), qui paraît être le seul milieu capable de dissoudre ce matériau particulièrement inerte chimiquement. Le titane et ses alliages peuvent être l'objet de différentes réactions dans un bain nitrofluorhydrique, rapportées par la littérature. Certaines font intervenir des formes ioniques du titane, qui se complexent avec des ions fluorure. Finalement, il est admis que les deux réactions les plus vraisemblables peuvent s'écrire comme suit :

3 Ti + 4 HNO₃ + 12 HF → 3 TiF₄ + 4 NO + 8 H₂O (1)

Ti + 4 HNO₃ + 6 HF → H₂TiF₆ + 4 NO₂ + 4 H₂O (2)

Dans ces processus, l'acide fluorhydrique joue le rôle d'attaque du métal par corrosion, alors que l'acide nitrique joue le rôle de passivation et de catalyseur des réactions. Les concentrations de ces deux acides diffèrent en fonction de l'objectif choisi, un bain plutôt chargé en HNO₃ étant utilisé pour le décapage, alors qu'un bain concentré en HF est employé pour l'usinage chimique.

Les pièces concernées par ces traitements sont en titane pur, c'est-à-dire ayant un degré de pureté supérieur à 99%, ou bien en alliage dans lequel le titane est majoritaire. Les différents types de titanes que l'on peut dissoudre dans un tel bain sont par exemple les titanes purs tels que le T40 (99,4 % de pureté), ou des alliages de titane comme le TA6V (6% d'aluminium et 4% de vanadium) et le Ti6242 (6% d'aluminium, 2% d'étain, 4% de zirconium et 2 % de molybdène).

Le processus d'usinage chimique génère l'enlèvement de matière sur la pièce et concentre le bain en titane dissous tandis que les acides HF et HNO₃ sont consommés. Différents paramètres influencent la mise en oeuvre et l'efficacité du bain en conditions de production.

Tout d'abord, on sait que les bains d'usinage chimique du titane fonctionnent dans des intervalles bien définis de concentration en acides HF et HNO₃. On considère communément que les bains sont fonctionnels à une concentration en HF allant de 0,5N à 1N et une concentration en HNO₃ allant de 1,4N à 1,8N. On veille donc à apporter régulièrement ces réactifs afin de les maintenir à des teneurs efficaces.

Par ailleurs, au fur et à mesure que des pièces sont traitées, le bain se charge en titane, ce qui entraîne une baisse de rendement de la réaction de dissolution du titane. En effet, en raison des limites de solubilité des espèces chimiques du titane, le bain perd en efficacité au-delà d'une certaine concentration en titane. On observe également une détérioration des surfaces des pièces créant un risque de corrosion intergranulaire du matériau, associée à une fragilisation par l'hydrogène. De ce fait, à partir d'une certaine concentration en titane dissous dans le bain, les pièces produites sont non conformes pour l'utilisation visée en raison des défauts apparaissant sur l'ensemble des pièces. Le maximum est généralement fixé à 30 g/l ou 40 g/l de titane par les opérateurs décidant des niveaux de rendement acceptables. On dit alors que le bain d'usinage chimique est usé.

Pour retrouver des conditions de production satisfaisantes, le bain doit être remplacé par une solution neuve après vidange du bain, ce qui oblige à interrompre la production durant plusieurs heures. On élimine certes le titane en excès, mais sans qu'il soit valorisé, et avec une perte considérable en HF et HNO₃ qui sont des produits chimiques très onéreux. Les bains usés doivent être stockés sur le site puis évacués conformément aux réglementations en vigueur-concernant le traitement des déchets toxiques, ce qui impose une logistique lourde, coûteuse et elle-même non respectueuse de l'environnement. Difficulté supplémentaire, très peu de véhicules sont aptes à transporter ce déchet liquide corrosif.

Afin d'éviter un arrêt complet de l'équipement qui pénalise la production, il est possible de réaliser une vidange partielle du bain, de manière à éliminer une fraction de la solution pour revenir à des concentrations en titane dissous acceptables. Des quantités de réactifs HF et HNO₃ doivent être apportées lors de chaque opération pour réajuster leur concentration dans le bain. Par cette méthode, les interruptions de production sont réduites en durée, mais plus fréquentes, et surtout, les solutions usées doivent toujours être éliminées, avec la même incidence économique et environnementale importante.

Pour remédier à ces inconvénients, il a été proposé de traiter les bains afin d'en récupérer les composants et de les rendre utilisables pour un autre usage. Toutefois, ces méthodes ont été abandonnées pour des raisons économiques ainsi que de dangerosité des acides concernés.

Il a été aussi proposé de régénérer les bains usés de sorte qu'ils soient utilisables dans un nouveau cycle de traitement de pièces en titane. Une méthode de régénération repose sur l'ajout d'un sel de potassium conduisant à la formation d'un composé du titane très peu soluble dans l'eau, formant un précipité qui peut être éliminé par décantation et/ou filtration de la solution. Cette opération peut être réalisée sur une fraction de la solution du bain qui est soutirée et traitée dans un équipement dédié.

Il est en particulier connu d'obtenir de l'hexafluorotitanate de potassium (K₂TiF₆), par addition de nitrate de potassium (KNO₃). Comme décrit dans le document FR 2 946 364, celui-ci réagit avec le titane dissous pour former de l'acide nitrique (HNO₃) en même temps que le sel solvaté K₂TiF₆(H₂O) qui a tendance à précipiter en milieu aqueux. De manière similaire, il est connu d'ajouter du fluorure de potassium (KF) qui conduit à la formation d'acide fluorhydrique (HF) et de K₂TiF₆(H₂O). Le précipité de sel d'hexafluorotitanate de potassium est ensuite séparé de la phase liquide, laquelle est renvoyée dans la cuve d'usinage. On réduit ainsi la concentration en titane dissous dans le bain tout en le réapprovisionnant en réactifs.

Le choix des sels de potassium comme réactifs repose sur le fait que le sel de K₂TiF₆ formé est très peu soluble dans l'eau, contrairement à d'autres sels tels que l'hexafluorotitanate de sodium, d'ammonium, et pire encore de calcium ou d'aluminium qui sont nettement plus solubles. Le sel de K₂TiF₆ précipite en quelques heures à température ambiante après quoi il peut être facilement séparé par filtration. Le filtrat contenant les acides régénérés ainsi qu'une quantité de titane n'ayant pas réagi, peut quant à lui être renvoyé à la cuve d'attaque.

Ce procédé présente toutefois un inconvénient majeur qui peut le disqualifier pour les applications aéronautiques. En effet, la présence de potassiums n'est pas explicitement autorisée dans le traitement des matériaux, ni dans les procédés de fabrication des pièces destinées à la construction aéronautique. Or, malgré toutes les précautions prises, il est très difficile de s'affranchir complètement du potassium dans la solution régénérée, en particulier du fait que la réaction entre le titane dissous avec les sels de potassium KF et KNO₃ n'est pas totale. Il reste donc du potassium dans le milieu, qui persiste sous forme soluble en petites quantités dans le filtrat et se retrouve finalement dans la cuve d'usinage chimique. Les ions potassiums introduits étant à nouveau en présence de titane dans le bain, ont tendance à précipiter sous forme de K₂TiF₆, ce qui peut provoquer un dépôt de sel sur les pièces et nuit à l'uniformité de l'attaque chimique. Ce procédé n'est donc pas exploité par les fabricants de pièces destinées à l'industrie aéronautique, ni d'ailleurs à d'autres secteurs pour lesquels les critères de qualité et de sécurité sont élevés.

Il existe donc un besoin de disposer d'un procédé de régénération des bains nitrofluorhydriques utilisés pour l'usinage chimique des pièces en titane, pouvant être mis en oeuvre pour l'industrie aéronautique. Un objectif de la présente invention est de répondre à ce besoin en proposant un procédé permettant d'éliminer le titane dissous dans le bain et de régénérer les réactifs acides HF et HNO₃. Un autre objectif de l'invention est qu'un procédé répondant à ces exigences puisse être conduit sur une solution extraite du bain, sans imposer d'interruption prolongée de la production. Encore un objectif de l'invention est de permette le retour dans le bain d'attaque des acides régénérés sans risquer d'y introduire des éléments indésirables tels que du potassium. De manière générale, un objectif de la présente invention est de disposer d'un procédé de régénération des bains d'usinage du titane, sûr et fiable en termes de qualité des pièces produites, respectueux des règles environnementales, facile à mettre en oeuvre et peu onéreux.

La présente invention répond à ces objectifs grâce à un procédé selon lequel on fait réagir une solution usée avec des sels de sodium, à savoir du nitrate de sodium (NaNO₃) et du fluorure de sodium (NaF), pour former de l'hexafluorotitanate de sodium (Na₂TiF₆), ainsi que les acides d'attaque HNO₃ et HF selon les réactions suivantes :

2 NaNO₃ + H₂TiF₆ → Na₂TiF₆ + 2 HNO₃ (3)

2 NaF + H₂TiF₆ → Na₂TiF₆ + 2 HF (4)

L'hexafluorotitanate de sodium (Na₂TiF₆) ayant une certaine solubilité dans l'eau, il ne précipite pas totalement de sorte qu'il est difficile de l'éliminer de la phase aqueuse. En effet, les sels d'hexafluorotitanate de sodium ont une solubilité nettement plus élevée que les sels de potassium, à savoir 65 g/l pour Na₂TiF₆ contre 12 g/l pour K₂TiF₆, à température ambiante (Ginsberg, H., Z. Anorg. Allgem. Chem. 204, 225 (1932) cité par V J Landis; J H Kaye; Battelle Pacific Northwest Labs Richland Wash., dans Radiochemistry Of Titanium, Ft. Belvoir Defense Technical Information Center, Jan. 1971). Une proportion significative de Na₂TiF₆ va donc rester dissoute dans la solution destinée à retourner dans la cuve d'usinage.

Or, la présence de ce complexe du sodium dans le bain a jusqu'à présent été considérée comme néfaste au bon déroulement de l'usinage, en raison du risque de précipitation et de dépôt de particules sur les pièces en cours de traitement dans le bain.

Dans le cadre de la présente invention, il est apparu que les propriétés particulières de ce composé peuvent au contraire être mises à profit : le sel Na₂TiF₆ précipite partiellement, permettant d'éliminer une grande partie du titane par décantation, tandis que la fraction qui reste solubilisée peut se retrouver dans le bain d'usinage, où il risque d s'accumuler au fil du temps et de précipiter. Or, de manière inattendue, dans les essais réalisés, le risque de formation de dépôts solides pouvant polluer les surfaces métalliques des pièces durant leur traitement chimique ne s'est pas manifesté. Au contraire, les sels de sodium et titane sont restés solubles dans le bain d'usinage jusqu'à des teneurs importantes, sans perturber le processus et sans précipiter.

Un autre avantage majeur du procédé selon l'invention est que la présence d'ions sodium dans la cuve d'usinage s'est avérée ne pas constituer non plus un obstacle au bon déroulement du procédé. En effet, la réaction du titane avec NaNO₃ et NaF n'étant pas complète (réactions (3) et (4) ci-dessus), ces espèces restent en solution à des teneurs non négligeables, vraisemblablement sous forme dissociée (ions sodium Na⁺ à côté de NO3⁻ et F⁻). Or, il a été trouvé que la présence de sodium dans le bain d'attaque ne perturbe pas le processus d'usinage chimique et que les pièces produites sont conformes aux spécifications requises. En outre, le sodium fait partie des composés dont l'innocuité a été établie pour les applications aéronautiques. Il n'est donc pas nécessaire de chercher à l'éliminer à tout prix de la solution lors de la régénération des bains usés.

Le processus de régénération n'est ainsi pas soumis à la contrainte de l'élimination totale du sodium, qu'il soit sous forme libre ou complexée, et un recyclage complet du bain d'usinage peut être envisagé. L'industriel peut alors jouer sur différents autres paramètres pour optimiser le procédé de régénération.

Ainsi, la présente invention a pour objet un procédé de régénération d'un bain nitrofluorhydrique d'attaque chimique de pièces en titane ou alliage de titane dans une cuve d'usinage, qui comprend de déterminer si ledit bain d'attaque est usé, et si c'est le cas, de réaliser les étapes consistant à :
a) - transférer une partie du bain d'attaque usé, dite solution usée, de la cuve d'usinage dans un réacteur,
b) - ajouter à la solution usée une quantité de NaF et une quantité de NaNO₃, et laisser réagir pour former du HF, du HNO₃, et du Na₂TiF₆,
c) - décanter pour séparer le précipité formé du surnageant,
d) - transférer le surnageant qui est une solution régénérée, dans un réservoir,
e) - mesurer les concentrations de HF, HNO₃, et titane dissous dans le réservoir et dans la cuve d'usinage
f) - déterminer le volume de solution régénérée pouvant être adjointe au bain d'attaque usé pour obtenir un bain régénéré dont les concentrations en HF, HNO₃ et titane dissous sont chacune respectivement dans un intervalle de concentrations acceptables prédéfini, et transférer ledit volume de solution régénérée dans la cuve d'usinage.

Le procédé ici défini peut être réalisé autant de fois que nécessaire pour régénérer le bain d'attaque utilisé durant des périodes longues de traitement de différentes pièces en titane ou alliage de titane. Un cycle complet, c'est-à-dire la succession des étapes a) à f), peut être répété séquentiellement, mais il peut aussi être conduit de manière chevauchante. Dans ce cas, par exemple les étapes e) et f) d'un cycle peuvent être réalisées en même temps que les étapes b) et c) d'un cycle suivant.

À chaque cycle, une partie du bain usé, qu'on désigne par "solution usée", est transférée dans un réacteur. À cette solution usée sont ajoutés les réactifs de régénérations, à savoir NaF et NaNO₃, qui réagissent avec le titane présent. La réaction produit du HF, du HNO₃, et du Na₂TiF₆ (étape b). À l'étape c), un précipité contenant essentiellement du Na₂TiF₆ solvaté va se former et décanter. Il peut être éliminé à l'état de boue par le fond de la cuve (du réacteur ou du décanteur). Le surnageant est la solution régénérée, qui contient essentiellement du HF et du HNO₃, secondairement du titane et du Na+ n'ayant pas réagi, et enfin une proportion de Na₂TiF₆, comme il sera développé en détail plus loin. À l'étape e), on mesure les différentes concentrations en jeu pour calculer à l'étape f) le volume de solution régénérée pouvant être adjointe au bain d'attaque usé pour obtenir un bain régénéré apte à réaliser une attaque chimique efficace de pièces en titane ou alliage de titane.

Un tel procédé permet de régénérer les solutions usagées afin de les recycler en récupérant les réactifs acides et en les réintroduisant dans le bain de traitement des pièces en titane. De la sorte, on réduit sensiblement les apports d'acides nécessaires à la reconstitution d'un bain fonctionnel.

Selon une caractéristique du procédé objet de la présente invention, à l'étape b), on ajoute NaF et NaNO₃ en quantités proportionnelles aux quantités molaires correspondant à la stœchiométrie des réactions de NaF et NaNO₃ avec le titane dissous. On détermine la quantité de NaF et de NaNO₃ à introduire en proportion de la quantité de titane présent dans le bain, selon les réactions d'équations (3) et (4) exposées précédemment. On note que les deux sels NaNO₃ et NaF peuvent être ajoutés ensemble ou séparément. De plus, on peut moduler leurs proportions relatives pour que l'une des réactions (3) ou (4) domine, selon les quantités d'un et de l'autre acide que l'on souhaite régénérer.

Le NaF et NaNO₃ peuvent être ajoutés en quantités proportionnelles identiques par rapport aux quantités molaires de la stœchiométrie des réactions de NaF et NaNO₃ avec le titane dissous. Pour des quantités molaires stœchiométriques, il faut introduire deux moles de NaF pour une mole de titane dissous, et également deux moles NaNO₃ pour une mole de titane dissous.

Le NaF et NaNO₃ peuvent également être ajoutés en quantités proportionnelles moindres par rapport aux quantités stœchiométriques. Par exemple à l'étape b), on peut ajouter NaF et NaNO₃ en quantités inférieures de 2% à 8%, de préférence de l'ordre de 5% en moles aux quantités molaires correspondant à la stœchiométrie des réactions de NaF et NaNO₃ avec le titane dissous. De la sorte, on s'assure que le sodium n'est pas en excès dans le milieu réactionnel, car même si sa présence n'est pas exclue du bain d'usinage, il est préférable de ne pas provoquer son accumulation et de conserver des conditions proches des conditions connues. Un procédé industriel n'est en outre pas à l'abri d'une dérive des appareils de mesure et de contrôle, qui aura peu d'incidence si une marge de sécurité a été prévue.

Conformément à l'invention, à l'étape b), on laisse de préférence réagir le mélange sous agitation durant 2 à 4 heures, à une température comprise entre 25°C et 40°C. De manière encore préférée, les réactifs NaF et NaNO₃ sont introduits dans le réacteur lorsque la solution est à une température similaire à la température d'usinage (entre 35°C et 45°C), ce qui permet d'optimiser le taux de régénération en solubilisant les réactifs. La réaction se prolonge entre 2 et 4 heures sous agitation afin d'obtenir le meilleur rendement de transformation en Na₂TiF₆. Ce composé va en partie précipiter en milieu aqueux, et en décantant, il va former une boue.

Dans un mode de réalisation préféré du procédé selon la présente invention, à l'étape c), la décantation est réalisée à une température positive, inférieure ou égale à 15°C. Encore de préférence, durant la décantation, la solution est refroidie à une température comprise entre 5°C et 15°C pour optimiser le rendement de précipitation et limiter la quantité de Na₂TiF₆ restant en solution et susceptible d'être transporté jusqu'à la cuve d'usinage et de s'y accumuler, ou de colmater des filtres en aval du réacteur dont il sera question plus loin. Puis, on procède au soutirage des boues, par exemple par une bonde ménagée en fond du réacteur (ou du décanteur).

L'étape b) de réaction et l'étape c) de décantation sont réalisées successivement, et peuvent se dérouler dans le même réacteur, la température étant régulée en conséquence. De manière alternative, on peut transvaser le contenu du réacteur dans un décanteur. L'un ou l'autre mode de réalisation est choisi sans difficulté par l'homme du métier, par exemple en fonction des conditions et équipements de production dont il dispose. Le procédé selon l'invention peut ainsi être mis en oeuvre de sorte que la décantation est réalisée dans ledit réacteur, ou après transfert du contenu du réacteur dans une cuve de décantation.

Selon une caractéristique préférée de l'invention, la solution régénérée obtenue peut être filtrée à l'entrée ou à la sortie dudit réservoir, à l'aide d'un dispositif apte à retenir les espèces chimiques dont la taille est supérieure à 5 µm. En effet, aux étapes b) et c), la précipitation et la décantation éliminent la plus grande partie de Ti sous forme de Na₂TiF₆(H₂O), soit environ 90 % à 98 % en masse selon les conditions du milieu réactionnel. Il peut donc rester jusqu'à 10% de Na₂TiF₆ dissous dans la solution, qu'il est préférable d'éliminer, même si les tests effectués montrent qu'il reste essentiellement sous forme soluble, en mettant en place une filtration de la solution régénérée. Un filtre ayant une maille de 5 µm suffit à retenir les complexes du titane. De tels filtres sont disponibles dans le commerce.

On indique ici qu'une filtration du bain d'usinage chimique peut être prévue en plus, par le biais d'une circulation au niveau de la cuve d'usinage. En effet, dans l'éventualité particulièrement défavorable où une quantité importante de sodium serait introduite dans le bain d'usinage chimique, il est possible de filtrer le bain en continu pour éliminer les sels de Na₂TiF₆ qui se formeraient. On note toutefois, qu'il s'agit d'un cas extrême et improbable du fait de sa solubilité.

Une fois la solution régénérée, elle est stockée dans ledit réservoir avec d'autres volumes de solution régénérée et sera renvoyée ultérieurement dans la cuve d'usinage (étape f). De manière avantageuse, la solution régénérée est chauffée à une température identique à celle du bain d'attaque avant d'être déversée dans la cuve d'usinage. Cette disposition permet une remise en température rapide du bain d'attaque pour réduire la durée d'arrêt de l'usinage lors de la reconstitution du bain d'attaque chimique.

Dans la mesure où une partie du bain usé est soutirée de la cuve pour le soumettre à la régénération, par exemple 10% du bain usé, un volume équivalent doit être apporté à l'étape f) pour reconstituer le bain. On peut jouer sur ce paramètre en apportant une quantité de solution régénérée, qu'on peut compléter par de l'eau. Il est avantageux que l'apport de solution régénérée dans la cuve d'usinage permette de reconstituer un bain d'attaque efficace. Dans ce but, on souhaite que les teneurs en HF et HNO₃ se situent dans un intervalle prédéfini acceptable. Selon une caractéristique préférée de l'invention, l'intervalle de concentrations acceptables de HF dans le bain d'usinage est compris entre 0,5N et 1N (soit entre 10 g/l et 20 g/l); et - l'intervalle de concentrations acceptables de HNO₃ dans le bain d'usinage est compris entre 1,4N et 1,8N (soit entre 88 g/l et 113 g/l).

De manière pratique, la solution régénérée doit être analysée pour déterminer les concentrations des espèces présentes et prévoir leur impact sur la composition du bain que l'on s'apprête à reconstituer. En outre, après l'étape f) de transfert du volume de solution régénérée dans la cuve d'usinage, on peut contrôler les concentrations en HF et HNO₃ dans ladite cuve d'usinage et les ajuster en fonction des concentrations respectives souhaitées dans le bain d'attaque.

De manière idéale, on cherchera à ce que les concentrations soient les plus hautes possibles à l'intérieur de l'intervalle. Si ces concentrations se trouvent être basses dans l'intervalle, HF et HNO₃ seront ajoutés dans le bain afin d'optimiser sa composition pour une attaque chimique efficace. On note que l'usinage chimique du titane consommant beaucoup plus de HF (6 HF pour 1 titane), on régénère plus de HF que de HNO₃ et on en renvoie donc davantage dans le bain d'attaque.

De manière particulièrement intéressante, la présente invention rend possible d'effectuer de nombreux cycles de régénération sans perte de temps. Il sera donc avantageux de travailler avec un bain d'attaque ayant une teneur en titane oscillant entre des valeurs proches choisies dans un intervalle optimisé, pour lequel le rendement est le meilleur. On sait en effet que la présence de titane dissous influe sur le rendement des réactions d'usinage. Même si la régénération permet d'éliminer la majeure partie du titane dans les boues précipitées, il est recommandé de s'assurer que le titane restant dans la solution régénérée qui va s'ajouter à celui restant dans le bain d'usinage, ne dépasse pas les limites acceptables. C'est pourquoi, selon une autre caractéristique préférée de l'invention, l'intervalle de concentrations acceptables du titane dans le bain d'usinage est compris entre 10 g/l et 40 g/l. Il est bien entendu que sa concentration doit être de préférence minimisée, afin de ne pas atteindre rapidement la valeur limite déclenchant une nouvelle opération de régénération.

De manière encore plus préférée, l'intervalle de concentrations acceptables du titane dans le bain d'usinage est compris entre 18 g/l à 25 g/l. On déclenche de ce fait plus fréquemment un cycle de régénération, mais le bain est maintenu dans une plage de fonctionnement plus efficace, c'est-à-dire pour laquelle le rendement de la réaction d'attaque chimique est optimum au regard de la teneur en titane dissous. Ce mode de réalisation était jusqu'à présent inenvisageable, car vidanger un bain d'attaque à 25 g/l de titane, encore opérationnel, constituait un gaspillage important de réactifs. On voit ici que le procédé selon l'invention, en régénérant les solutions d'attaque et en les utilisant pour reconstituer les bains au lieu de les éliminer comme un déchet, offre une possibilité d'optimiser l'usinage chimique tant d'un point de vue qualitatif que du point de vue économique.

Dans tout ce qui précède, il a été discuté de la régénération des bains usés qui sont dans le cas d'espèce des bains nitrofluorhydriques. On entend par "bain usé", un bain d'attaque dont la teneur en titane dissous s'écarte d'un intervalle de valeurs prédéfinies comme acceptables. L'intervalle des valeurs acceptables peut être défini par un homme du métier, en fonction de la disponibilité des équipements d'usinage et de régénération, de leur capacité, d'objectifs de rendement, ou autres et de préférence à l'intérieur des valeurs précédemment exposées. Ainsi, selon l'invention, on détermine si le bain d'attaque est usé par les opérations consistant à :
- mesurer la concentration du titane dissous dans le bain d'attaque,
- comparer la concentration mesurée avec ledit intervalle de concentrations acceptables prédéfini, et
- si la concentration mesurée est supérieure à la valeur maximale dudit intervalle, déclencher l'étape a) de transfert d'une partie du bain d'attaque usé de la cuve d'usinage vers ledit réacteur.
Comme expliqué précédemment, un intervalle de concentrations acceptables en titane peut être compris entre 10 g/l et 40 g/l, ou encore entre 18 g/l à 25 g/l.

La solution usée soutirée de la cuve d'usinage est avantageusement stockée dans une cuve tampon, éventuellement avec des solutions usées précédemment vidangées, avant d'être transférée dans le réacteur, de sorte que l'étape a) est réalisée en deux temps. Les étapes suivantes b) à f) de régénération ne sont initiées que lorsqu'un volume suffisant a été collecté. On peut donc effectuer plusieurs vidanges du bain usé avant de lancer l'opération de régénération.

Bien que les essais réalisés aient montré que la présence de sodium dissous dans le bain d'usinage n'a pas d'incidence négative sur la qualité de l'usinage, il est préconisé de surveiller la teneur en sodium dans le bain d'usinage, pour que celui-ci ne s'accumule pas de manière exagérée. On évite de la sorte tout risque que des réactions secondaires indésirables puissent se produire. On veut éviter notamment une éventuelle réaction entre le sodium et les autres réactifs tels que le titane et le fluor, pouvant provoquer une reprécipitation et gêner le bon déroulement du processus (par dépôt de particules sur les surfaces, encrassement des conduits, ...). C'est pourquoi, selon une caractéristique préférée de l'invention, une mesure de la concentration en sodium dans le bain d'attaque est réalisée et, si ladite concentration en sodium est supérieure à une valeur limite prédéterminée, une fraction du bain d'attaque est évacuée de la cuve d'usinage. De préférence, ladite valeur limite prédéterminée de la concentration en sodium dans le bain d'usinage est d'au plus 7 g/l, et de préférence inférieure à 5 g/l.

Cette opération peut être effectuée systématiquement avant qu'une partie du bain d'attaque usé constituant une solution usée soit transférée dans le réacteur, ou bien selon un autre rythme que l'homme du métier déterminera. En outre, si dans certaines conditions réactionnelles particulières (et non rencontrées à ce jour) la présence de sodium conduisait à la formation d'un sel de sodium Na₂TiF₆ dans le bain, il est possible de s'en débarrasser sans difficulté majeure. Pour ce faire, comme indiqué précédemment, la cuve d'usinage peut être dotée d'un filtre intégré dans un système de recirculation afin d'éliminer les particules solides et les plus grosses molécules.

Lorsque les pièces usinées sont en alliage de titane, le vanadium est très souvent présent. Il va s'accumuler peu à peu dans le bain, de sorte qu'il est préférable d'en limiter la progression. On procède selon le même principe que ci-dessus, en éliminant une fraction de bain usé lorsque la concentration du vanadium est trop élevée. C'est pourquoi, le procédé selon l'invention peut comprendre une opération par laquelle une mesure de la concentration en vanadium dissous dans le bain d'attaque est réalisée et, si la teneur en vanadium est supérieure à une valeur limite prédéterminée, une fraction du bain d'attaque est évacuée de la cuve d'usinage. L'homme du métier pourra fixer cette valeur limite, par exemple à un niveau de l'ordre de quelques grammes à une dizaine de grammes par litre.

Ainsi, il est apparu que des bains nitrofluorhydriques d'attaque chimique du titane et de ses alliages peuvent être régénérés à l'aide des composés du sodium NaF et NaNO₃. On peut de la sorte en une seule opération, réduire la concentration en titane dissous dans le bain en éliminant un précipité de Na₂TiF₆ et revenir vers une concentration satisfaisante des acides dans le bain. De manière inattendue, et bien qu'une fraction de sodium ne réagisse pas avec le titane dissous et que tout le sel de titane Na₂TiF₆ ne soit pas éliminé de la solution par décantation, il a été possible de reconstituer des bains d'usinage efficaces et de fabriquer des pièces en titane et ses alliages conformes aux exigences de l'industrie aéronautique. Les bains nitrofluorhydriques concernés sont aussi bien des bains d'usinage chimique au sens strict que des bains de décapage de pièces en titane ou alliage de titane.

Le fait d'utiliser des sels de sodium allège les contraintes du procédé de régénération. Ceci offre la possibilité de jouer sur des paramètres autres pour optimiser le procédé d'un point de vue technique, environnemental et économique.

La présente invention sera mieux comprise, et des détails en relevant apparaîtront, à la lumière de la description qui va être faite, en relation avec les figures annexées, dans lesquelles :
La Figure 1 est une représentation schématique d'un équipement de régénération des bains d'attaque chimique selon l'invention.
La Figure 2 montre les cristaux du précipité de Na₂TiF₆ obtenus après lavage et séchage des boues de régénération, vus au microscope électronique à balayage.

### EXEMPLE 1 : Modalités de régénération

Une cuve d'usinage 100 contenant un bain d'attaque à base de HNO₃ et de HF reçoit des pièces en titane ou alliage de titane. Au fur et à mesure des opérations d'usinage, le bain se charge en titane, tandis que HNO₃ et HF sont consommés. Des mesures de ces concentrations sont effectuées à intervalles de temps réguliers, afin de contrôler l'état du bain et de le remettre en état si nécessaire. Les concentrations acceptables correspondent pour chaque composé à une plage de concentrations prédéterminées comme étant celles à l'intérieur desquelles on souhaite conduire l'usinage des pièces. Les intervalles acceptables ci-après sont donnés à titre d'exemple pour un bain d'usinage de pièces en titane ou alliages.
Ti : 10 g/l à 40 g/l (de préférence 18 g/l à 25 g/l)
HF : 10 g/l à 20 g/l
HNO₃ : 88 g/l à 113 g/l

Les réactifs d'attaque HNO₃ et HF étant consommés en permanence, un ajustement est effectué chaque fois que nécessaire lorsque l'un au moins est en limite inférieure de son intervalle acceptable, et ce malgré - et indépendamment de - l'apport constitué par le retour de la solution régénérée.

Le bain est considéré comme usé, soit lorsque la concentration en titane atteint 40 g/l (ou 25 g/l si l'on opte pour des rendements de réaction plus élevés et des cycles de fonctionnement plus courts), soit lorsque sa concentration va atteindre cette limite au cours d'une prochaine opération d'usinage de pièces. Une partie du bain usé, représentant par exemple 10% de celui-ci, est alors transférée vers le circuit de régénération.

En pratique, il est avantageux d'estimer le rythme d'accroissement de la concentration du titane dans le bain, afin d'anticiper le moment où il devrait atteindre la limite haute de l'intervalle acceptable. On peut aussi évaluer la fréquence à laquelle il faut opérer un transfert de solution usée vers le circuit de régénération et procéder au transfert d'une partie du bain systématiquement à ladite fréquence, ce qui facilite l'automatisation. Lorsque le procédé est automatisé, on peut intercaler un bac tampon 110 entre la cuve d'usinage chimique 100 et le réacteur 1 de régénération, de manière à y déverser la solution usée au moment voulu, puis à déclencher une opération de régénération ultérieurement, sans avoir à synchroniser ces deux actions.

La solution usée est déversée, directement depuis la cuve d'usinage 100 ou à partir du bac tampon 110, dans le réacteur 1. Les réactifs de régénération NaF et NaNO₃ sont alors introduits dans le réacteur 1 par les conduits d'alimentation 30 et 31 prévus à cet effet. Les quantités ajoutées sont calculées en fonction de la teneur en titane de la solution usée, en se fondant les quantités molaires des réactions (3) et (4). Elles sont déterminées stœchiométriquement pour une réaction totale et minorées de 1% à 8% afin d'éviter de retrouver dans le bain d'usinage trop de NaNO₃ et du NaF n'ayant pas réagi avec le titane dans le réacteur 1. Ces composés pourraient réagir avec le titane dans la cuve d'usinage 100 et précipiter, ce qu'on désire éviter même si la précipitation d'une faible quantité de sel de titane ne semble pas provoquer de problème pour l'usinage chimique. Le tableau 1 ci-après donne les quantités de réactifs à ajouter en fonction des quantités de titane dissous dans solution usée (minorées de 5% par rapport à la stœchiométrie des réactions).

**Tableau 1 : Concentrations en NaNO₃ et NaF ajoutés en fonction de la teneur en titane dans la solution usée**

| **[Ti] en (g/l)** | **[NaNO3] (g/l)** | **[NaF] (g/l)** |
|---|---|---|
| 18,0 | 60,8 | 30,1 |
| 20,0 | 67,6 | 33,4 |
| 22,0 | 74,4 | 36,7 |
| 24,0 | 81,1 | 40,1 |
| 26,0 | 87,9 | 43,4 |
| 28,0 | 94,6 | 46,8 |
| 30,0 | 101,4 | 50,1 |
| 35,0 | 118,3 | 58,45 |
| 40,0 | 135,2 | 66,8 |

Le réacteur 1 est maintenu à une température choisie entre 25°C et 40°C, durant 2 à 4 heures, sous agitation. On choisit une température de préférence proche de 40°C si on souhaite optimiser la réaction, ce qui ne nécessite au demeurant pas un apport énergétique important puisque c'est la température d'usinage. La réaction produit du HF, du HNO₃, et du Na₂TiF₆. Le contenu du réacteur 1 est refroidi à une température choisie entre 0°C et 15°C, de préférence à environ 5°C, pour favoriser la précipitation Na₂TiF₆.

De manière alternative, le contenu du réacteur 1 est d'abord transféré dans un décanteur (non représenté), également refroidi. La solubilité du sel de Na₂TiF₆ peut ainsi être réduite de près de la moitié. Dans les conditions décrites, la précipitation et la décantation éliminent environ 95 % en masse de Ti sous forme de Na₂TiF₆(H₂O). Il peut donc rester du Na₂TiF₆ dissous dans la solution, en quantité de l'ordre de 5%. Le précipité formé contenant essentiellement du Na₂TiF₆ solvaté est éliminé à l'état de boue par le fond du réacteur 1.

Certains des métaux des alliages de titane présents dans la solution usée sont également éliminés au moins en partie, par précipitation et décantation, car ils forment des complexes avec les réactifs de régénération. C'est les cas en particulier de l'aluminium qui précipite sous forme de Na₃AlF₆ et est éliminé à plus de 99%, de l'étain (75% d'élimination), du zirconium (61% d'élimination) et du fer (18% d'élimination).

Les boues sont ensuite débarrassées de la plus grande partie de leur eau dans un filtre 11 puis stockées avant élimination. Les modalités d'élimination, incluant leur séchage, leur recyclage, ou autres traitements, n'entrent pas dans le périmètre de la présente invention. On comprend cependant que les volumes de déchets à traiter sont ici significativement réduits par rapport aux rejets d'usinage chimique conventionnels.

Le surnageant est une solution régénérée, qui contient essentiellement du HF et du HNO₃, secondairement du titane et du Na+ n'ayant pas réagi, et enfin une proportion de Na₂TiF₆, qui reste partiellement soluble. Elle est transférée dans le réservoir 2 avant d'être renvoyée dans la cuve d'usinage 100.

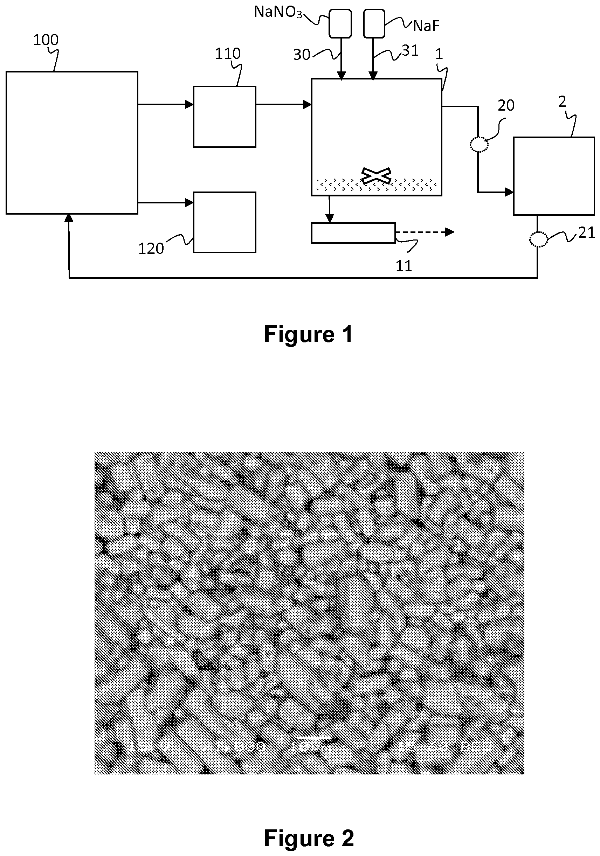

Afin d'éliminer d'éventuels cristaux susceptibles de se former par précipitation du Na₂TiF₆ encore présent dans la solution, un filtre 20, 21 peut être disposé en entrée et/ou en sortie du réservoir 2. Un filtre à membrane peut être par exemple utilisé, choisi de sorte qu'il retient les particules de taille supérieure à 10 µm, et de préférence supérieure à 5 µm. Comme le montre le cliché présenté en Figure 2, les cristaux de Na₂TiF₆ ont une taille permettant une filtration efficace par ce moyen.

Avant d'être déversée dans la cuve d'usinage 100, la solution régénérée sera chauffée à une température identique à celle du bain d'attaque, soit environ 35°C à 45°C. Le bain d'attaque retrouve ainsi plus rapidement ses conditions de fonctionnement, de sorte que le processus d'usinage peut n'être interrompu que pendant une heure. Il peut donc fonctionner de manière quasi-continue.

Le volume de solution régénérée qui est renvoyé dans la cuve d'usinage 100 est déterminé sur la base des mesures de concentration des différentes espèces présentes dans la solution régénérée et dans le bain d'attaque. Après adjonction dudit volume de solution régénérée, de nouvelles mesures sont réalisées et un ajustement est effectué, soit pas ajout d'eau, soit par ajout de HNO₃ et/ou de HF.

De manière générale, des mesures de concentrations sont réalisées régulièrement en divers points de l'équipement, ce qui permet de contrôler et de monitorer les différentes étapes du processus, automatiquement, en permanence et de manière fiable.

De manière concomitante, on surveille qu'il n'y ait pas d'accumulation excessive de sodium dans la cuve d'usinage 100, afin d'éviter tout risque de réactions secondaires indésirables. Si le sodium dépasse une valeur limite préalablement fixée, par exemple 7 g/l ou de préférence 5 g/l, une fraction du bain usé est éliminée vers une cuve de délestage 120.

En outre, certains métaux alliés ne sont pas éliminés au cours de la régénération. C'est le cas en particulier du vanadium, qui va peu à peu se concentrer dans le bain d'attaque. On surveille sa concentration et s'il arrive à un niveau excessif, fixé par exemple entre 5 g/l et 10 g/l, on élimine une fraction du bain usé vers la cuve de délestage 120.

Une autre approche peut être adoptée pour éviter l'accumulation de composés indésirables dans le bain d'attaque, consistant à éliminer systématiquement une fraction de celui-ci, à intervalles de temps prédéfinis ou à des moments particuliers où on réalise certaines opérations. On peut par exemple éliminer une fraction du bain d'attaque avant chaque soutirage de solution usée à régénérer. La fraction de bain à éliminer peut être plus ou moins importante, par exemple 5% ou 10%, selon la nature des pièces usinées et la nature du traitement. On maintient ainsi les teneurs, notamment en vanadium et sodium, à des niveaux modérés. La mesure de leur concentration a alors davantage vocation de contrôle qu'à déclencher une vidange.

Le procédé de régénération du bain ici décrit est réalisé de manière discontinue, en soutirant la solution usée au moment voulu et en déclenchant un cycle de régénération lorsqu'un certain volume doit être traité, puis en stockant les volumes de solution régénérée dans un réservoir 2. On peut également recourir à un équipement utilisant deux réacteurs 100, fonctionnant en alternance. Lorsqu'une solution usée est en cours de régénération, une autre est réintroduite dans le bain de production. Quel que soit le système adopté, l'usinage chimique n'est interrompu qu'un court instant, de l'ordre d'une heure. Ce système de régénération en discontinu est simple à mettre en place et demande peu de moyens.

Un dispositif de régénération continue peut également être utilisé. Un tel système permet de ne pas interrompre la production lors de la régénération, mais il a un coût plus élevé et présente une complexité plus importante de mise en place.

### EXEMPLE 2 : Rendements

Des essais de régénération par le procédé selon l'invention ont été réalisés sur un bain contenant du titane dissous à hauteur de 25,2 g/l. Les teneurs en HNO₃ et HF dans le bain ont été relevées à 1,55 mol/l et 0,81 mol/l respectivement, soit à des niveaux proches des valeurs minimales acceptables selon un mode de réalisation préféré de l'invention (1,4 mol/l et 0,5 mol/l, respectivement).

Les essais ont été conduits selon trois protocoles différents, en faisant varier les réactifs de régénération : a) NaNO₃ uniquement, b) NaF uniquement, et c) NaNO₃ et NaF, les deux réactifs étant apportés en concentrations molaires identiques. Les réactifs de régénération sont apportés en quantités stœchiométriques diminuées de 5%.

Une partie du bain usé a été prélevée et placée dans un récipient à 35°C sous agitation, durant 2 heures, en présence d'un ou des réactifs, ajoutés en quantités stœchiométriques. Puis le mélange réactionnel a été refroidi à 5 °C et mis à décanter. Le précipité formé a été séparé du surnageant. La teneur en titane a été mesurée dans le surnageant (qui est une solution régénérée) et la diminution par rapport à la teneur initiale (abattement) a été calculée. Les résultats sont présentés dans le Tableau 2.

**Tableau 2 : Abattement en titane après régénération**

| | **a) NaNO3** | **b) NaF** | **c) NaNO3 + NaF** |
|---|---|---|---|
| Quantité de réactif(s) | 170,4 g/l | 84,0 g/l | 85,2 g/l en NaNO3 (soit 1 mol/l) et 42,0 g/l de NaF (soit 1 mol/l) |
| Concentration finale en titane | 4,5 g/l | 3,8 g/l | 3,3 g/l |
| **Abattement** | 82% | 85% | 87% |

Dans l'essai c), les teneurs trouvées dans la solution régénérée sont de 1,9 mol/l de HNO₃ et de 1,16 mol/l de HF, supérieures aux valeurs limites maximales acceptables selon ledit mode de réalisation préféré (1,8 mol/l et 1 mol/l, respectivement) ce qui n'est pas gênant puisque la solution régénéré va ensuite être diluée en retournant dans la cuve d'usinage. La solution régénérée va ainsi apporter une quantité significative de réactifs d'attaque régénérés dans le bain.

Les résultats présentés ici sont très prometteurs, alors qu'ils ne sont pas optimisés. Ils peuvent être améliorés en ajustant les paramètres en conditions de production.

### EXEMPLE 3 : Influence du sodium

Des essais ont été conduits pour tester l'influence du sodium sur les pièces soumises à l'usinage chimique. La question posée est de vérifier que les réactifs sodés utilisés pour la régénération ne nuisent pas à la qualité des pièces usinées. En effet, on a vu que les réactions (3) et (4) ne sont pas totales, de sorte qu'il reste toujours une certaine quantité, même minime, de réactifs NaF et NaNO₃ en solution. Ces composés de petite taille ne peuvent pas être éliminés par filtration. Ils vont donc se trouver *in fine* dans le bain d'attaque.

Une éprouvette en alliage titane-vanadium TA6V de dimension 5 cm x 5 cm et d'épaisseur 3 mm, homologuée pour les tests de fragilisation par l'hydrogène et identique aux éprouvettes de suivi des traitements d'usinage chimique en série, a été lancée suivant les mêmes conditions que pour un suivi usuel en conditions de production : enlèvement de matière par usinage pour atteindre une épaisseur de 0,6 mm. Elle a été plongée dans un bain d'usinage chimique contenant de l'acide nitrique et du fluorure de sodium dans les concentrations de 1,6N (soit 100,8 g/l) en HNO₃ et 0,8N (soit 22,5 g/l) en NaF. Ainsi, dans ce bain, l'acide fluorhydrique HF est remplacé par du NaF, lequel est à une concentration si élevée qu'il est matériellement impossible de l'atteindre dans le cadre du procédé de régénération selon l'invention. Le bain d'attaque ne contient pas de titane dissous, de sorte que le sodium ne peut pas réagir avec celui-ci et reste sous forme libre dans le bain. L'essai est donc conduit dans des conditions extrêmement défavorables.

L'éprouvette ainsi usinée a été soumise à une analyse d'hydrogène, un test d'attaque intergranulaire et un test de pitting. Les conclusions du laboratoire sont les suivantes : il y a absence d'attaque intergranulaire, absence de pitting et absence de fragilisation par hydrogène. Pour chacun des tests, l'éprouvette est conforme aux exigences des normes techniques définies par l'industrie aéronautique pour l'usinage chimique des alliages de titane.

Ces essais démontrent ainsi que le sodium, présent dans la technologie décrite, ne fragilise pas les pièces soumises à l'usinage chimique. La solubilité du NaF dans la solution régénérée et qui repartirait dans le bain d'usinage chimique ne porterai donc pas atteinte à la santé des pièces usinées chimiquement.

## Revendications

1. Procédé de régénération d'un bain nitrofluorhydrique d'attaque chimique de pièces en titane ou alliage de titane se trouvant dans une cuve d'usinage (100), *caractérisé en ce qu*'il comprend de déterminer si ledit bain d'attaque est usé, et si c'est le cas, de réaliser les étapes consistant à :
a) - transférer une partie du bain d'attaque usé, dite solution usée, de la cuve d'usinage (100) dans un réacteur (1),
b) - ajouter à la solution usée une quantité de NaF et une quantité de NaNO₃, et laisser réagir pour former du HF, du HNO₃, et du Na₂TiF₆,
c) - décanter pour séparer le précipité formé du surnageant,
d) - transférer le surnageant qui est une solution régénérée, dans un réservoir (2),
e) - mesurer les concentrations de HF, HNO₃ et titane dissous dans le réservoir (2) et dans la cuve d'usinage (100),
f) - déterminer le volume de solution régénérée pouvant être adjointe au bain d'attaque usé pour obtenir un bain régénéré dont les concentrations en HF, HNO₃ et titane dissous sont chacune respectivement dans un intervalle de concentrations acceptables prédéfini, et transférer ledit volume de solution régénérée dans la cuve d'usinage (100).

2. Procédé selon la revendication 1, ***caractérisé en ce que**,* à l'étape b), on ajoute NaF et NaNO₃ en quantités proportionnelles aux quantités molaires correspondant à la stœchiométrie des réactions de NaF et NaNO₃ avec le titane dissous.

3. Procédé selon l'une des revendications 1 ou 2, ***caractérisé en ce que**,* à l'étape b), on ajoute NaF et NaNO₃ en quantités inférieures de 1% à 8%, de préférence inférieures de 5% en moles, aux quantités molaires correspondant à la stœchiométrie des réactions de NaF et NaNO₃ avec le titane dissous.

4. Procédé selon l'une des revendications précédentes, ***caractérisé en ce que**,* à l'étape b), on laisse réagir le mélange sous agitation durant 2 à 4 heures, à une température comprise entre 25°C et 40°C.

5. Procédé selon l'une des revendications précédentes, ***caractérisé en ce que**,* à l'étape c), la décantation est réalisée à une température positive, inférieure ou égale à 15°C.

6. Procédé selon la revendication précédente, ***caractérisé en ce que*** la décantation est réalisée dans le réacteur (1), ou après transfert du contenu dudit réacteur dans une cuve de décantation.

7. Procédé selon l'une des revendications précédentes, ***caractérisé en ce que*** la solution régénérée obtenue est filtrée à l'entrée ou à la sortie dudit réservoir, à l'aide d'un dispositif (20, 21) apte à retenir les espèces chimiques dont la taille est supérieure à 5 µm.

8. Procédé selon l'une des revendications précédentes, ***caractérisé en ce que*** la solution régénérée est chauffée à une température identique à celle du bain d'usinage avant d'être déversée dans la cuve d'usinage (100).

9. Procédé selon l'une des revendications précédentes, ***caractérisé en ce que**,*
- ledit intervalle de concentrations acceptables de HF dans le bain d'usinage est compris entre 0,5N et 1N ; et
- ledit intervalle de concentrations acceptables de HNO₃ dans le bain d'usinage est compris entre 1,4N et 1,8N.

10. Procédé selon l'une des revendications précédentes, ***caractérisé en ce que**,* ledit intervalle de concentrations acceptables du titane dans le bain d'usinage est compris entre 10 g/l et 40 g/l.

11. Procédé selon l'une des revendications précédentes, ***caractérisé en ce que*** ledit intervalle de concentrations acceptables du titane dans le bain d'usinage est compris entre 18 g/l à 25 g/l.

12. Procédé selon l'une des revendications précédentes, ***caractérisé en ce que*** l'on détermine si le bain d'attaque est usé par les opérations consistant à :
- mesurer la concentration du titane dissous dans le bain d'attaque,
- comparer ladite concentration mesurée avec ledit intervalle de concentrations acceptables prédéfini, et
- si ladite concentration mesurée est supérieure à la valeur maximale dudit intervalle, déclencher l'étape a) de transfert d'une partie du bain d'attaque usé de la cuve d'usinage vers ledit réacteur.

13. Procédé selon l'une des revendications précédentes, ***caractérisé en ce qu'***une mesure de la concentration en sodium dans le bain d'attaque est réalisée et, si ladite concentration en sodium est supérieure à une valeur limite prédéterminée, une fraction du bain d'attaque est évacuée de la cuve d'usinage.

14. Procédé selon l'une des revendications précédentes, ***caractérisé en ce que*** ladite valeur limite prédéterminée de la concentration en sodium dans le bain d'attaque est d'au plus 7 g/l, et de préférence inférieure à 5 g/l.

15. Procédé selon l'une des revendications précédentes, *caractérisé en ce qu'*une mesure de la concentration en vanadium dissous dans le bain d'attaque est réalisée et, si la teneur en vanadium est supérieure à une valeur limite prédéterminée, une fraction du bain d'attaque est évacuée de la cuve d'usinage.

16. Procédé de régénération selon l'une des revendications précédentes, ***caractérisé en ce que*** le bain nitrofluorhydrique d'attaque chimique est un bain d'usinage chimique ou un bain de décapage de pièces en titane ou alliage de titane.

## Patentansprüche

1. Verfahren zur Regeneration eines Salpetersäure/Flusssäure-Bades zum Ätzen von Teilen aus Titan oder Titanlegierung, das sich in einem Behandlungstank (100) befindet, ***dadurch gekennzeichnet, dass*** im Rahmen desselben bestimmt wird, ob das Ätzbad verbraucht ist, und die folgenden Schritte durchgeführt werden, wenn dies der Fall ist:
a) - Überführen einer Teilmenge des verbrauchten Ätzbades, die als verbrauchte Lösung bezeichnet wird, von dem Behandlungstank (100) in einen Reaktor (1),
b) - Hinzufügen einer Menge an NAF und einer Menge an NaNO₃ zu der verbrauchten Lösung, und Reagierenlassen, sodass sich HF, HNO₃ und Na₂TiF₆ bilden,
c) - Dekantieren, um den Niederschlag, welcher sich gebildet hat, vom Überstand zu trennen,
d) - Überführen des Überstands, der eine regenerierte Lösung darstellt, in einen Vorratsbehälter (2),
e) - Messen der Konzentrationen an HF, HNO₃ und gelöstem Titan in dem Vorratsbehälter (2) und in dem Behandlungstank (100),
f) - Bestimmen des Volumens an regenerierter Lösung, das dem verbrauchten Ätzbad zugesetzt werden kann, um ein regeneriertes Bad zu erhalten, dessen Konzentrationen an HF, HNO₃ und gelöstem Titan jeweils in einem vorbestimmten Intervall akzeptabler Konzentrationen liegen, und Überführen des Volumens an regenerierter Lösung in den Behandlungstank (100).

2. Verfahren nach Anspruch 1, ***dadurch gekennzeichnet, dass*** im Schritt b) NaF und NaNO₃ in Mengen hinzugefügt werden, die zu den Molmengen proportional sind, welche der Stöchiometrie der Reaktionen von NaF und NaNO₃ mit dem gelösten Titan entsprechen.

3. Verfahren nach einem der Ansprüche 1 oder 2, ***dadurch gekennzeichnet, dass*** im Schritt b) NaF und NaNO₃ in Mengen hinzugefügt werden, die um 1 mol-% bis 8 mol-%, vorzugsweise um 5 mol-%, geringer als die Molmengen sind, welche der Stöchiometrie der Reaktionen von NaF und NaNO₃ mit dem gelösten Titan entsprechen.

4. Verfahren nach einem der vorhergehenden Ansprüche, ***dadurch gekennzeichnet, dass*** im Schritt b) die Mischung 2 bis 4 Stunden lang bei einer Temperatur im Bereich von 25 °C bis 40 °C reagieren gelassen wird.

5. Verfahren nach einem der vorhergehenden Ansprüche, ***dadurch gekennzeichnet, dass*** im Schritt c) das Dekantieren bei einer positiven Temperatur erfolgt, die höchstens 15 °C beträgt.

6. Verfahren nach dem vorhergehenden Anspruch, ***dadurch gekennzeichnet, dass*** das Dekantieren in dem Reaktor (1) erfolgt, oder nachdem der Inhalt dieses Reaktors in einem Absetztank überführt wurde.

7. Verfahren nach einem der vorhergehenden Ansprüche, ***dadurch gekennzeichnet, dass*** die erhaltene regenerierte Lösung mittels einer Vorrichtung (20, 21), welche dazu befähigt ist, chemische Spezies mit einer Größe von mehr als 5 µm zurückzuhalten, an der Eintrittsöffnung oder an der Austrittsöffnung des Vorratsbehälters filtriert wird.

8. Verfahren nach einem der vorhergehenden Ansprüche, ***dadurch gekennzeichnet, dass*** die regenerierte Lösung auf eine Temperatur erwärmt wird, die mit derjenigen des Behandlungsbad übereinstimmt, bevor sie in den Behandlungstank (100) gegossen wird.

9. Verfahren nach einem der vorhergehenden Ansprüche, ***dadurch gekennzeichnet, dass***
- das Intervall akzeptabler Konzentrationen an HF in dem Behandlungsbad im Bereich von 0,5 N bis 1 N liegt; und
- das Intervall akzeptabler Konzentrationen an HNO₃ in dem Behandlungsbad im Bereich von 1,4 N bis 1,8 N liegt.

10. Verfahren nach einem der vorhergehenden Ansprüche, ***dadurch gekennzeichnet, dass*** das Intervall akzeptabler Konzentrationen des Titans in dem Behandlungsbad im Bereich von 10 g/L bis 40 g/L liegt.

11. Verfahren nach einem der vorhergehenden Ansprüche, ***dadurch gekennzeichnet, dass*** das Intervall akzeptabler Konzentrationen des Titans in dem Behandlungsbad im Bereich von 18 g/L bis 25 g/L liegt.

12. Verfahren nach einem der vorhergehenden Ansprüche, ***dadurch gekennzeichnet, dass*** mittels der folgenden Vorgänge bestimmt wird, ob das Bad verbraucht ist:
- Messen der Konzentration des gelösten Titans in dem Ätzbad,
- Vergleichen der gemessenen Konzentration mit dem vorbestimmten Intervall akzeptabler Konzentrationen, und
- wenn die gemessene Konzentration den Höchstwert des Intervalls überschreitet, Durchführen des Schrittes a) des Überführens einer Teilmenge des verbrauchten Ätzbades aus dem Behandlungstank in den Reaktor.

13. Verfahren nach einem der vorhergehenden Ansprüche, ***dadurch gekennzeichnet, dass*** eine Messung der Konzentration an Natrium in dem Ätzbad vorgenommen wird und eine Fraktion des Ätzbades aus dem Behandlungstank entfernt wird, wenn diese Konzentration an Natrium einen vorbestimmten Grenzwert überschreitet.

14. Verfahren nach einem der vorhergehenden Ansprüche, ***dadurch gekennzeichnet, dass*** der vorbestimmte Grenzwert der Konzentration an Natrium in dem Ätzbad höchstens 7 g/L beträgt und vorzugsweise geringer als 5 g/L ist.

15. Verfahren nach einem der vorhergehenden Ansprüche, ***dadurch gekennzeichnet, dass*** eine Messung der Konzentration an Vanadium in dem Ätzbad vorgenommen wird und eine Fraktion des Ätzbades aus dem Behandlungstank entfernt wird, wenn diese Konzentration an Vanadium einen vorbestimmten Grenzwert überschreitet.

16. Regenerationsverfahren nach einem der vorhergehenden Ansprüche, ***dadurch gekennzeichnet, dass*** es sich bei dem Salpetersäure/Flusssäure-Ätzbad um ein Bad zur chemischen Behandlung oder ein Bad zum Beizen von Teilen aus Titan oder Titanlegierung handelt.

## Claims

1. A method of regenerating a nitric and hydrofluoric acid bath for chemically etching parts made of titanium or titanium alloy and contained in a machining vessel (100), the method being ***characterized in that*** it comprises determining whether said etching bath is spent, and if so, in performing the steps consisting in:
a) transferring a portion of the spent etching bath, referred to as the "spent" solution, from the machining vessel (100) into a reactor (1);
b) adding a quantity of NaF and a quantity of NaNO₃ to the spent solution, and allowing it to react to form HF, HNO₃, and Na₂TiF₆;
c) settling to separate the resulting precipitate from the supernatant;
d) transferring the supernatant, which is a regenerated solution, into a tank (2);
e) measuring the concentrations of HF, of HNO₃, and of dissolved titanium in the tank (2) and in the machining vessel (100); and
f) determining the volume of regenerated solution that can be added to the spent etching bath in order to obtain a regenerated bath in which the concentrations of HF, of HNO₃, and of dissolved titanium lie in respective predefined acceptable concentration ranges, and transferring said volume of regenerated solution into the machining vessel (100).

2. A method according to claim 1, ***characterized in that*** in step b), NaF and NaNO₃ are added in quantities that are proportional to the molar quantities that correspond to stoichiometric reactions of NaF and of NaNO₃ with the dissolved titanium.

3. A method according to claim 1 or claim 2, ***characterized in that*** in step b), NaF and NaNO₃ are added in quantities that are 1% to 8% less, preferably 5% less, in molar terms than the molar quantities corresponding to stoichiometric reactions of NaF and of NaNO₃ with the dissolved titanium.

4. A method according to any preceding claim, ***characterized in that*** in step b), the mixture is allowed to react under stirring for a period of 2 hours to 4 hours at a temperature lying in the range 25°C to 40°C.

5. A method according to any preceding claim, ***characterized in that*** in step c), the settling is performed at a positive temperature that is less than or equal to 15°C.

6. A method according to the preceding claim, ***characterized in that*** the settling is performed in the reactor (1), or after the content of said reactor has been transferred into a settling vessel.

7. A method according to any preceding claim, ***characterized in that*** the resulting regenerated solution is filtered at the inlet or at the outlet of said tank, using a device (20, 21) suitable for retaining chemical species of size greater than 5 µm.

8. A method according to any preceding claim, ***characterized in that*** the regenerated solution is heated to a temperature identical to the temperature of the machining bath prior to being poured into the machining vessel (100).

9. A method according to any preceding claim, ***characterized in that**:*
- said range of concentrations that are acceptable for HF in the machining bath extends from 0.5N to 1N; and
- said range of concentrations that are acceptable for HNO₃ in the machining bath extends from 1.4N to 1.8N.

10. A method according to any preceding claim, ***characterized in that*** said range of concentrations that are acceptable for titanium in the machining bath extends from 10 g/L to 40 g/L.

11. A method according to any preceding claim, ***characterized in that*** said range of concentrations that are acceptable for titanium in the machining bath extends from 18 g/L to 25 g/L.

12. A method according to any preceding claim, ***characterized in that*** it is determined whether the etching bath is spent by the operations consisting in:
- measuring the concentration of dissolved titanium in the etching bath;
- comparing said measured concentration with said predefined range of acceptable concentrations; and
- if said measured concentration is greater than the maximum value of said range, triggering step a) of transferring a portion of the spent etching bath from the machining vessel to said reactor.

13. A method according to any preceding claim, ***characterized in that*** the concentration of sodium in the etching bath is measured, and if said sodium concentration is greater than a predetermined limit value, a fraction of the etching bath is removed from the machining vessel.

14. A method according to any preceding claim, ***characterized in that*** said predetermined limit value for the concentration of sodium in the etching bath is no greater than 7 g/L, and is preferably less than 5 g/L.

15. A method according to any preceding claim, ***characterized in that*** the concentration of vanadium dissolved in the etching bath is measured, and if said vanadium concentration is greater than a predetermined limit value, a fraction of the etching bath is removed from the machining vessel.

16. A regeneration method according to any preceding claim, ***characterized in that*** the nitrate and hydrofluoric acid chemical etching bath is a bath for chemically machining or a bath for pickling parts made of titanium or titanium alloy.
